# EUROPEAN PATENT SPECIFICATION

(11) **EP 1 754 961 B1**
(45) Date of publication and mention of the grant of the patent: **14.04.2010**
(21) Application number: 05740970.8
(22) Date of filing: 18.05.2005
(51) Int. Cl.: G01F 23/26

(54) **CAPACITIVE LIQUID STATE SENSOR**
KAPAZITIVER FLÜSSIGKEITSZUSTANDSSENSOR
CAPTEUR D'ÉTAT LIQUIDE CAPACITATIF

(30) Priority: 18.05.2004 JP 2004148025
(43) Date of publication of application: 21.02.2007
(73) Proprietor: NGK Spark Plug Co., Ltd., Nagoya-shi, Aichi 467-8525 (JP)
(72) Inventor: SATO, Yoshikuni, NGK SPARK PLUG CO., LTD., Mizuho-ku, Nagoya-shi, Aichi 4678525 (JP); YAMAMOTO, Takashi, NGK SPARK PLUG CO., LTD., Mizuho-ku, Nagoya-shi, Aichi 4678252 (JP); SASANUMA, Takeo, NGK SPARK PLUG CO., LTD., Mizuho-ku, Nagoya-shi, Aichi 4678525 (JP); TOYODA, Hideki, NGK SPARK PLUG CO., LTD., Mizuho-ku, Nagoya-shi, Aichi 4678525 (JP)
(74) Representative: Grünecker, Kinkeldey, Stockmair & Schwanhäusser Anwaltssozietät
(86) International application number: PCT/JP2005/009037
(87) International publication number: WO 2005/111552

(56) References cited:
- JP-A- 11 264 755
- JP-U- 63 101 815
- US-A- 2 918 818
- US-A1- 2004 027 137
- US-B1- 6 443 006

## Description

### TECHNICAL FIELD

This invention relates to a capacitive liquid state sensor for detecting a state of liquid contained in a container.

### BACKGROUND OF THE INVENTION

In an exhaust gas emitted from a diesel vehicle are contained nitride oxides (NOx) other than carbon monoxide (CO) and hydrocarbon (HC). Thus, in recent years, it has been practiced to reduce the harmful nitride oxides into non-harmful gas. For example, it has been proposed to dispose at an exhaust muffler of the diesel vehicle a NOx selective catalytic reduction (SCR) catalyst, while keeping urea water that serves as reduction agent in a container separately installed on the vehicle, and inject the urea water into the catalyst to thereby reduce NOx into a non-harmful gas such as N₂. Since this system, if the urea water is used up, is disabled to urge NOx to be reduced so that a large amount of NOx is emitted from the vehicle, there have been proposed various steps such as a step of disposing a sensor in a container containing urea water for detecting a water level (liquid level) of the urea water and giving an alarm when the remaining amount of the urea water becomes equal to or lower than a predetermined value.

As an example of such a sensor for detecting a water level, there is known a capacitive liquid state sensor. The capacitive liquid state sensor detects an electrostatic capacity at a space (hereinafter referred to "intervening space") between an outer tubular electrode made of a conductive material and in the form of a thin, long tube and an inner electrode disposed within the outer tubular electrode so as to extend axially therewithin. In case of the capacitive liquid level sensor used for measuring the level of the liquid that is electrically conductive as urea water, the inner electrode is formed with an insulation layer on the outer surface for preventing occurrence of a short between the outer tubular electrode and the inner electrode. The capacitive liquid state sensor is set in a container in such a manner that the axial direction of the outer tubular electrode coincides with the up and down direction of the water level. In case electrically conductive liquid is used, the electrostatic capacity of a sensor portion not dipped in the liquid is determined depending upon an air layer between the gap and the thickness of the insulating layer of the inner electrode. On the other hand, the electrostatic capacity of a sensor portion dipped in the liquid is determined depending upon the thickness of the insulating layer since the electrically conductive liquid becomes equal in potential to the outer tubular electrode, and becomes higher than that of the sensor portion not dipped in the liquid. For this reason, as the sensor portion dipped in the liquid increases, the measured electrostatic capacity increases, thus making it possible to detect the change in the water level.
US patent US 2, 918, 818 discloses a capacitive liquid state sensor according to the preamble of claim 1.

Such a capacitive liquid state sensor is formed so as to open at the front end side (the front end side of the outer tubular electrode) or formed with a hole even if closed at the front end side so that liquid can flow into or out of the intervening space with ease (refer to, for example, Patent Document 1). Further, the prior art capacitive liquid state sensor has at the side wall of the outer tubular electrode a slit that extends from a front end to a rear end thereof and is thereby adapted so that liquid can flow into or out of the intervening space smoothly even when one end side of the outer tubular electrode is clogged by a foreign matter or the like (refer to, for example, Patent Document 2).
Patent Document 1: Unexamined Japanese Patent Publication No. 7-318395
Patent Document 2: Unexamined Japanese Utility Model Publication No. 63-101815

However, in case a diesel vehicle is used in cold districts or the like terrain, a liquid container may possibly be exposed to such environments of -30 °C to -40 °C. In such a case, the liquid in the intervening space of the capacitive liquid state sensor is cooled rapidly and may possibly start freezing at both of the front end side and the rear end side when observed along the axial direction of the outer tubular electrode. In the meantime, in case the intervening space formed between the outer tubular electrode and the inner electrode is nearly closed as Patent Document 1 and the liquid existing in the intervening gap starts freezing at both of the front end side and the rear end side, the pressure caused by volumetric expansion at the time of freezing of the liquid is released to the intermediate side of the liquid existing in the intervening gap. However, since the intervening space is closed, there is no place to which the aforesaid pressure is to be released such that a large volumetric increase is caused by freezing. As a result, there may possibly occur such a case in which when the liquid existing in the intervening gap is frozen, the outer tubular electrode and the inner electrode is deformed due to the increase of the aforesaid pressure and the large volumetric expansion. Particularly, in case the inner electrode is cylindrical (solid), the outer tubular electrode is liable to be deformed since the strength of the inner electrode is high.

Further, in this instance, if the capacitive liquid state sensor is of such kind in which the outer tubular electrode has a slit, circulating of liquid between the outside of the outer tubular electrode and the intervening gap can be obtained through the slit, so that the pressure that increases with the volumetric expansion at the time of freezing of the liquid can be released to the outside of the outer tubular electrode effectively. However, even if the aforesaid pressure is released to the outside by the slit, not a little volumetric expansion is still caused in the intervening gap at the time of freezing of the liquid. For this reason, if the slit is formed so as to extend throughout the length of the outer tubular electrode as Patent Document 2, there is a tendency that the strength of the outer tubular electrode itself is decreased, thus causing a problem that deformation of the outer tubular electrode is caused by small volumetric expansion.

### SUMMARY OF THE INVENTION

The present invention has been made in order to solve the aforesaid problem and has for its object to provide a capacitive liquid state sensor that is capable of effectively releasing a pressure in an intervening gap to the outside by being formed with a slit at an outer tubular electrode while being capable of preventing decrease in the strength due to forming of the slit.

To accomplish the above-described object, there is provided according to a first aspect of the present invention a capacitive liquid state sensor comprising an outer tubular electrode made of a conductive material, an inner electrode made of a conductive material and disposed within the outer tubular electrode and along the axial direction of the outer tubular electrode, and a base for supporting the outer tubular electrode and the inner electrode at a rearward side thereof and in a non-contact condition, characterized in that the outer tubular electrode includes a plurality of slits elongated axially thereof and having the axial length shorter than the overall axial length thereof, and the plurality of slits includes a first slit and a second slit, a front end of the first slit is positioned more forward than a front end of the second slit, and a rear end of the first slit is position more forward than a rear end of the second slit.

Further, according to another aspect of the present invention, there is provided a capacitive liquid state sensor characterized in that a front end of any one of the plurality of slits is positioned more rearward than a front end of the outer tubular electrode.

Further, according to a further aspect of the present invention, there is provided a capacitive liquid state sensor characterized in that a rear end of any one of the plurality of slits is positioned more forward than the rear end of the outer tubular electrode.

Further, according to a further aspect of the present invention, there is provided a capacitive liquid state sensor characterized in that the plurality of slits are positioned on at least one generator at an outer circumferential surface of the outer tubular electrode.

Further, according to a further aspect of the present invention, there is provided a capacitive liquid state sensor characterized in that the plurality of slits are positioned on each of a plurality of different generators at the outer circumferential surface of the outer tubular electrode.

Further, according to a further aspect of the present invention, there is provided a capacitive liquid state sensor characterized in that it is satisfied such a relation that the rear end of the first slit is positioned more forward than the front end of the second slit, and an intermediate no-slit formed area in which no-slit exists all over the circumference is positioned between the rear end of the first slit and the front end of the second slit.

Further, according to a further aspect of the present invention, there is provided a capacitive liquid state sensor characterized in that the sum of opening widths of the slits is 3% of the outer circumference of the outer tubular electrode or more when observed in a section taken by a plane crossing the center axis of the outer tubular electrode at right angles.

Further, according to a further aspect of the present invention, there is provided a capacitive liquid state sensor characterized in that an insulation layer is formed on the outer circumferential surface of the inner electrode, and the sum of opening widths of the slits is 10% of the outer circumference of the outer tubular electrode or less when observed in the aforementioned section.

Further, according to a further aspect of the present invention, there is provided a capacitive liquid state sensor characterized in that an insulation layer is formed on the outer circumferential surface of the inner electrode, and an opening width of the slits in the direction crossing the axial direction at right angles is 5 mm or less.

Further, according to a further aspect of the present invention, there is provided a capacitive liquid state sensor characterized in that the liquid is urea water.

In the capacitive liquid state sensor according to the present invention, it is the most remarkable point that the plurality of slits include the first slit and the second slit and satisfy such a relation that the front end of the first slit is positioned more forward than the front end of the second slit and the rear end of the first slit is positioned more forward than the rear end of the second slit. By the outer tubular electrode having the slits with such a relation, circulation of liquid between the outside of the outer tubular electrode and the intervening space can be attained through movement of the liquid in the axial direction of the outer tubular electrode though the plurality of slits are provided. Accordingly, even if there occurs such a case where the liquid existing in the intervening space is cooled rapidly and frozen, it becomes possible to release the pressure that is caused in the intervening gap by volumetric expansion of liquid at the time of freezing so as to increase toward the intermediate side from the front end side and the rear end side, to the outside of the outer tubular electrode through the slits.

Further, since according to the present invention, circulation of liquid is attained through movement of the liquid in the axial direction of the outer tubular electrode by providing the outer tubular electrode with the plurality of slits that satisfies the aforesaid relation without providing the outer tubular electrode with a slit that opens throughout the length of the outer tubular electrode, deformation of the outer tubular electrode is hard to be caused even if not a little volumetric expansion of the liquid existing in the intervening space is caused due to freezing since the portions (areas) of the outer tubular electrode positioned between the slits serve as reinforcement portions. Further, since in forming in the outer tubular electrode an opening for accelerating circulation of liquid through movement of the liquid in the axial direction of the outer tubular electrode, a plurality of narrow and long slits that open while extending along the axial direction of the outer tubular electrode are formed, the work for forming the slits can be easier as compared with that in case of forming a number of circular holes along the longitudinal direction of the outer tubular electrode and it becomes possible to provide a capacitive liquid state sensor that is excellent in the production efficiency.

Accordingly, the capacitive liquid state sensor of this invention can effectively prevent the space (gap size) between the inner electrode and the outer tubular electrode from becoming larger even in case the liquid in the intervening space is frozen and can measure the electrostatic capacity between the outer tubular electrode and the inner electrode over a long period with high accuracy.

Further, in the capacitive liquid state sensor of this invention, each front end of the plurality of slits is positioned more rearward than the front end of the outer tubular electrode, so that a no-slit formed area (forward no-slit formed area) in which no slit exists over all the circumference is provided so as to lie along the front end of the outer tubular electrode. By this, it becomes possible to increase the strength of the front end side of the outer tubular electrode and effectively prevent deformation of the outer tubular electrode due to freezing of the liquid existing in the intervening gap.

Further, in the capacitive liquid state sensor of this invention, each rear end of the plurality of slits is positioned more forward than the rear end of the outer tubular electrode, so that a no-slit formed area (rearward no-slit formed area) in which no slit exists over all the circumference is provided so as to lie along the rear end of the outer tubular electrode. By this, it becomes possible to increase the strength of the rearward side of the outer tubular electrode and effectively prevent deformation of the outer tubular electrode due to freezing of the liquid existing in the intervening space. Further, although when the sensor is used so as to be subjected to vibrations (e.g., used in vehicle), stress due to vibrations tends to concentrate at the rearward portion of the outer tubular electrode since the rearward side of the outer tubular electrode is supported on the base together with the rearward side of the inner electrode, the strength of the rearward side of the outer tubular electrode can be increased by providing the outer tubular electrode with the aforesaid rearward no-slit formed area and the vibration resistance of the sensor itself can be improved.

Further, in the capacitive liquid state sensor of the present invention, the plurality of slits are formed on at least one generator of the outer circumferential surface of the outer tubular electrode, so that circulation of liquid between the outside of the outer tubular electrode and the intervening space can be attained in a way as to cause the liquid to move in the axial direction of the outer tubular electrode effectively. By this, the pressure in the intervening space that is caused by the volumetric expansion at the time of freezing of liquid varies in a way as to increase toward the intermediate side from the front end side and the rear end side can be released effectively to the outside of the outer tubular electrode.

Further, in the capacitive liquid state sensor of this invention, the plurality of slits are formed on each of the plurality of different generators of the outer circumferential surface of the outer tubular electrode, so that the pressure existing in the intervening space in a way as to increase toward the intermediate section from the front end side and the rear end side, can be released efficiently to the outside from a plurality of circumferential portions of the outer tubular electrode.

Further, in the capacitive liquid state sensor of this invention, there is interposed between the first slit and the second slit of the outer tubular electrode the intermediate no-slit formed area in which no slit exists over all the circumference. By this, an area in which no slit exists over all the circumference is disposed at an intermediate portion with respect to the axial direction of the outer tubular electrode, so that deformation of the outer tubular electrode can be effectively inhibited even when the liquid existing in the intervening gap causes not a little volumetric expansion.

Further, in the capacitive liquid state sensor of this invention, with respect to the section crossing the center axis of the outer tubular electrode at right angles so as to include at least one slit or more, the slit is formed at a portion which is 3% or more of the outer circumference of the outer tubular electrode, so that the pressure that increase with increase in the volumetric expansion at the time of freezing of the liquid can be released effectively.

Further, in the capacitive liquid sate sensor of this invention, with respect to the section crossing the center axis of the outer tubular electrode at right angles so as to include at least one slit or more, the sum of the opening widths of the slits is limited to 10% or less of the outer circumference of the outer tubular electrode, so that a solid object of such a size that contacts and damages the insulation layer, as a lump of ice resulting from freezing of liquid at the outside of the outer tubular electrode is hard to pass the slit and the insulation layer can be protected effectively.

Further, in the capacitive liquid state sensor of this invention, the opening width extended in the direction to cross the aforesaid axial direction of the slit at right angles is limited to 5 mm or less, so that it becomes possible to prevent a solid object of such a size that contacts and damages the insulation layer, as a lump of ice caused by freezing of liquid at the outside of the outer tubular electrode, from going into the outer tubular electrode through the slits, and the insulation layer can be protected effectively.

### BRIEF DESCRIPTION OF THE DRAWINGS

FIG. 1 is a longitudinal sectional view of liquid level sensor.
FIG. 2 is a perspective view of an outer tubular electrode.
FIG. 3 is an exploded perspective view of a front end and its adjacent portion of the liquid level sensor.
FIG. 4 is an enlarged, sectional view of a portion adjacent a level of urea water contained in a space (intervening space) between an outer tubular electrode and an inner electrode.
FIG. 5 is a sectional view of a portion where any of slits is formed, which is taken along the direction crossing the center axis of the outer tubular electrode at right angles.
FIG. 6 is a table showing an evaluation test of the strength of the outer tubular electrode in relation to the width of slit and the number of divisions on the generator.
FIG. 7 is a perspective view of an outer tubular electrode that differs in the arrangement of slits (slit-formed portion) from the outer tubular electrode of FIG. 2, according to another embodiment.
FIG. 8 is a perspective view of an outer tubular electrode that differs in the arrangement of slits (slit-formed portion) from the outer tubular electrode of FIG. 2, according to a further embodiment.

### DETAILED DESCRIPTION OF THE INVENTION

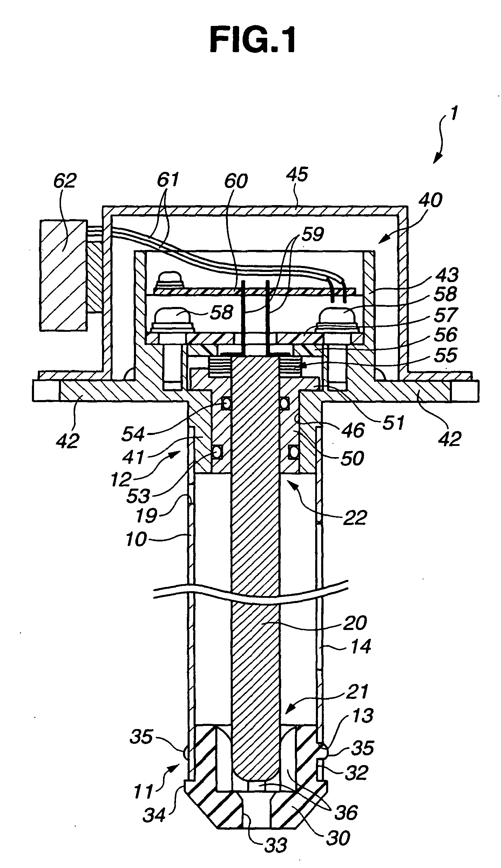

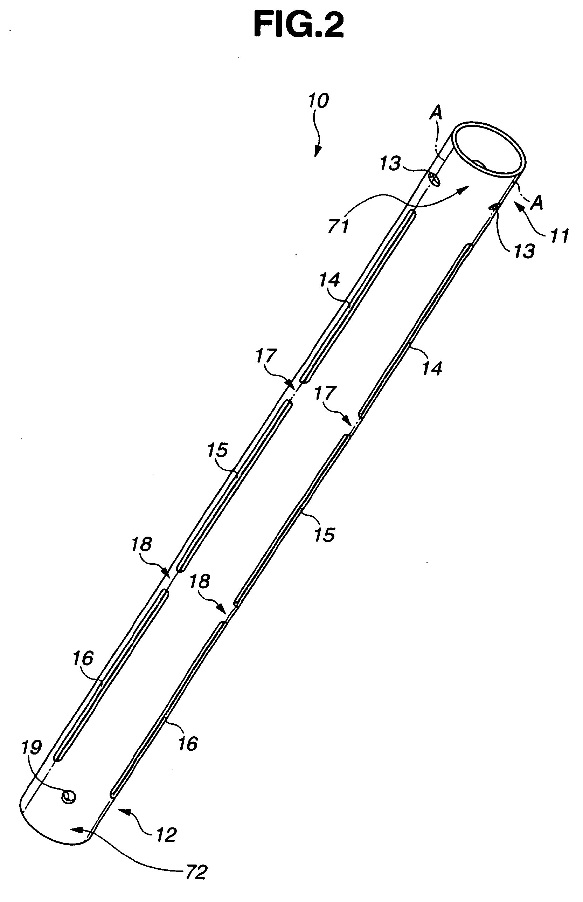

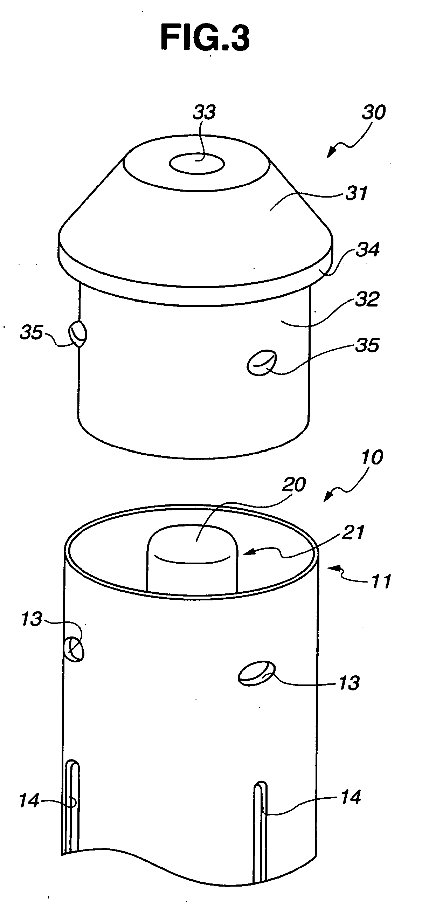

Hereinafter, a capacitive liquid state sensor according to an embodiment of the present invention will be described with reference to the drawings. First, with reference to FIGS. 1 to 3, a liquid level sensor 1 will be described as an example of a capacitive liquid state sensor. FIG. 1 is a longitudinal sectional view of a liquid level sensor 1. FIG. 2 is a perspective view of an outer tubular electrode 10. FIG. 3 is an exploded perspective view of a front end and its adjacent portion of the liquid level sensor 1.

The liquid level sensor 1 of this embodiment is attached to a tank (not shown) containing urea water that is used for reduction of nitrogen oxide (NOx) contained in an exhaust gas of a diesel vehicle and is used for detecting the state of liquid, i.e., for measuring the level of urea water.

As shown in FIG. 1, the liquid level sensor 1 consists of an outer tubular electrode 10 that has a hollow cylindrical shape, an inner electrode 20 disposed inside the outer tubular electrode 10 and along the axial direction of the outer tubular electrode 10, and a base section 40 that supports the outer tubular electrode 10 and the inner electrode 20 in a non-contact condition relative to each other.

The outer tubular electrode 10 is made of an electrically conductive metallic material and has a slender, hollow cylindrical shape as shown in FIG. 2. A front end portion 11 of the outer tubular electrode 10, which corresponds in position to a forward side (the lower side in FIG. 1) of the liquid level sensor 1 is provided with an opening portion 13 for preventing falling off of a bushing 30 (refer to FIG. 1) for the internal electrode 20. Along a generator (indicated by a one-dot chain line A in FIG. 2) of the outer tubular electrode 10, which is located at the position where the opening portion 13 is disposed, narrow slits 14, 15 and 16 are formed in this order from the front end portion 11 side to a rear end portion 12 (to the end portion of the base 40 side of the liquid level sensor 1), independently from each other. The slits 14, 15 and 16 are nearly equal in shape and arranged intermittently along one generator and with equal intervals, and there are positioned between the slits 14, 15 and 16 intermediate no-slit formed areas 17 and 18 which are tubular and all over the circumference of which there does not exist any slit. Further, at the front end portion 11 and the rear end portion 12 are provided continuously from the respective end surfaces thereof a forward no-slit formed area 71 and a rearward no-slit formed area 72 which are tubular and over all the circumference of which there does not exist any slit. Each of the slits 14, 15 and 16 is formed on each of three generators arranged on the outer circumferential surface of the outer tubular electrode 10 with equal circumferential intervals. Further, at the rear end portion 12 of the outer tubular electrode 10 and on a generator different from the generators on which the slits 14, 15 and 16 are formed respectively is formed an air vent 19.

As described above, in the liquid level sensor 1 of this embodiment, it is satisfied such a relation that when of the plurality of (concretely, nine) slits 14, 15 and 16, one slit 14 and one slit 15 are selected, a front end of one slit 14 is positioned more forward (more upward in FIG. 2) than a front end of the other slit 15 and a rear end of one slit 14 is position more forward (upper side in FIG. 2) than a rear end of the other slit 15. In this instance, one slit 14 corresponds to "first slit" in the claims and the other slit 15 corresponds to "second slit" in the claims. In the meantime, when of the plurality of slits 14, 15 and 15, the slit 14 and the slit 16 are selected or the slit 15 and the slit 16 are selected, the above-described relation is satisfied.

Then, as shown in FIG. 1, the outer tubular electrode 10 is welded while being in a state of engaging at the rear end portion 12 to an outer periphery of an electrode support portion 40 of the metallic base 40. The base 40 functions as a support for fixing the liquid level sensor 1 to the tank (not shown) containing urea water and has a flange portion 42 attaching holes (not shown) for this end. Further, on the side of the flange portion 42 of the base 40 opposite to the electrode support portion 41 is formed a housing portion 43 for housing a relay circuit board or the like for making the outer tubular electrode 10 and the inner electrode 20 be electrically connectable with an external circuit (not shown). In the meantime, the circuit board 60 is mounted on board mounting portions (not shown) that protrude from four corners of an inner wall surface of the housing section. Connection with the external circuit is carried out, 42 after covering and protecting of the housing section 43, by way of a connector 62 fixed to a side of a cover 45 that is in turn fixed to the flange portion, and external connecting terminals (not shown) of the connector 62 and the wiring of the circuit board 60 are connected by means of cables 61.

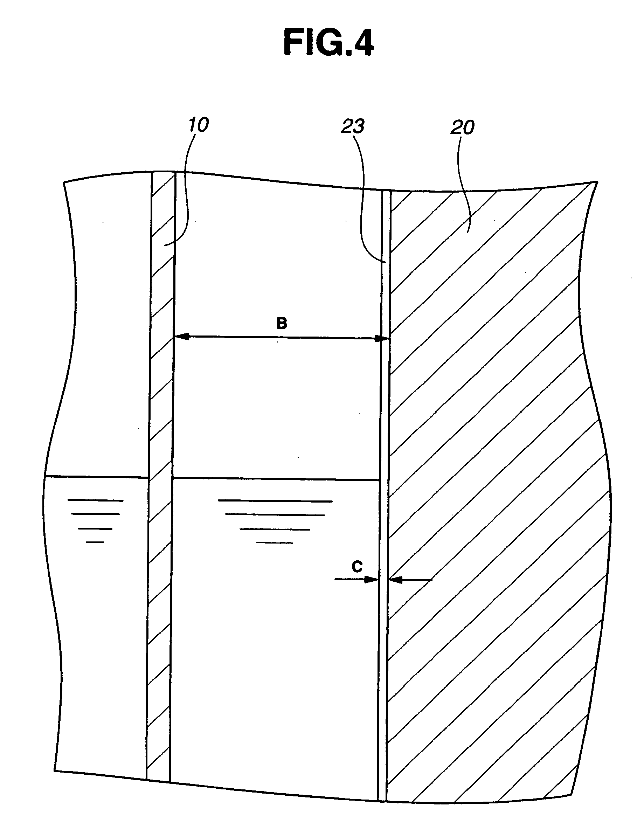

The electrode support portion 41 of the base 40 is formed with a hole 46 that extends therethrough toward the inside of the housing section 43, and the internal electrode 20 is fixedly disposed in the hole 46. The internal electrode 20 according to this embodiment is an electrically conductive metallic rod that is solid and cylindrical and has such an overall length that is nearly equal to that of the outer tubular electrode 10. The end of the front end portion 21 side (the lower side in FIG. 1 and the forward side of the liquid level sensor 1) of the inner electrode 20 is chamfered. On the outer peripheral surface of the inner electrode 20 is formed an insulation layer 23 (refer to FIG. 4) made of PFA for instance. Further, with the rear end portion 22 side (the upper side in FIG. 1) are engaged a pipe guide 55 and an inner case 50 for fixing the inner electrode 20 to the base 40. The pipe guide 55 is an annular guide member connected to the rear end portion 22 of the inner electrode 20 so as to be positioned on a part thereof close to an edge.

Further, the inner case 50 is a tubular insulating resinous member supporting and positioning the inner electrode 20 so that the inner electrode 20 and the outer tubular electrode 10 are assuredly insulated from each other, and is engaged at the forward side in the hole 46 of the electrode support portion 41 of the base 40. The inner case 50 is formed with a flange portion 51 protruding radially outward and is inserted through the receiving portion 43 side into the inner circumferential periphery of the electrode support portion 41 at the time of engagement of the inner case 50 in the electrode support portion 41. Then, the flange portion 51 is abuttingly engaged with the bottom surface of the receiving portion 43, thereby preventing the inner case 50 from passing through the inner circumferential periphery of the electrode support portion 41. The inner electrode 20 is also inserted into the inner circumferential periphery of the inner case 50 through the receiving portion 43 side and prevented from slipping off from the inner case 50 through abutting engagement of the pipe guide 55 with the flange portion 51.

Further, at the inner and outer circumferential peripheries of the inner case 50 are provided a first O-ring 53 and a second O-ring 54, respectively. The first O-ring 53 sealingly closes the space between the outer circumferential periphery of the inner case 50 and the hole 46 of the base 40, and the second O-ring 54 sealingly closes the space between the inner circumferential periphery of the inner case 50 and the outer circumferential periphery of the rear end portion 22 of the inner electrode 20. This provides such a seal that when the liquid level sensor 1 is attached to the tank (not shown), the inside and outside of the tank are not communicated with each other through the receiving portion 43. In the meantime, at the flange portion 42 of the base 40 and on the surface thereof facing toward the forward side of the liquid level sensor 1 is fittingly disposed a plate-shaped rubber member which is not shown, thereby providing a seal between the inside and the outside of the tank at the time of attachment to the tank, similarly to the first O-ring 53 and the second O-ring 54.

Then, at the time of assembling of the inner electrode 20 to the base 40, a pipe guide 55 is pressed against the flange portion 51 of the inner case 50 by means of two pressing plates 56 and 57. The pressing plate 57 is fixedly held inside the receiving portion 43 and in a state of holding the pressing plate 56 between it and the pipe guide 55 and pushing the pipe guide 55, by means of screws 58. By this, the inner electrode 20 connected to the pipe guide 55 is fixedly held inside the electrode support portion 41. The pressing plates 56 and 57 have at the center thereof holes into which lead wires 59 for the inner electrode 20 are inserted and connected to the circuit board 60. The circuit board 60 is connected at a grounding side electrode to the base 40 though not shown in detail such that the outer tubular electrode 10 is electrically connected to the grounding side.

Further, the inner electrode 20 supported by the electrode support portion 41 of the base 40 is held by a rubber bushing 30 so that its front end portion 21 is in a non-contact condition relative to the front end portion 11 of the outer tubular electrode 10. As shown in FIGS. 1 and 3, the bushing 30 is formed with, at an end of a cylindrical body portion 32 of an outer diameter nearly equal to an inner diameter of the outer tubular electrode 10, a tapered front end portion 31. The front end portion 31 has a body portion 32 side end that is formed into a flange section 34 that is larger in outer diameter than the body portion 32 so as to serve as a stopper when the outer tubular electrode 10 is fitted in the body portion 32.

At the inner circumferential periphery of the body portion 32 of the bushing 30 are provided a plurality of ribs 36 for positioning and holding the front end portion 21 of the inner electrode 20, which are arranged separately in a circumferential array. The front end portion 31 is formed with a hole 33 that is connected to the inner circumferential periphery side of the body portion 32 and thereby constructed so that even in a condition where the inner electrode 20 is held by the inner circumferential periphery of the body portion 32 the inside and the outside of the bushing 30 are communicated through the space between the ribs 36. By this, urea water contained in the tank can go through the hole 33 into the gap (space) formed between the outer tubular electrode 10 and the inner electrode 20. Further, at the outer circumferential periphery of the body portion 32 are provided protrusions 35 that are engaged in the openings 13 of the outer tubular electrode 10 to perform a function in preventing slipping off of the bushing 30. The inner electrode 20 held by such a bushing 30 is prevented from contact with the outer tubular electrode 20.

In the meantime, as described hereinbefore, the slits 14, 15 and 16 on one generator of the outer circumferential surface of the outer tubular electrode 10 are formed in row on the generator, and the intermediate no-slit formed areas 17 and 18, all over the circumference of which there is not formed any slit, are positioned between the slits. Namely, there is not formed on a generator of the outer tubular electrode 10 any slit that extends continuously from the front end portion 11 to the rear end portion 12 of the outer tubular electrode 10, and a strength at portions between the slits is attained by the intermediate no-slit formed areas 17 and 18. In this embodiment, since the outer tubular electrode 10 is provided with the slits 14, 15 and 16, urea water in the tank (not shown) can easily flow into and out of the intervening gap and good circulation of urea water between the intervening gap and the outside of the outer tubular electrode 10 can be caused through movement of the urea water in the axial direction of the outer tubular electrode 10 desirably. For this reason, even at the time of freezing of urea water in cold districts, a rising pressure that is caused by volumetric expansion of urea water at the time of freezing can be released to the outside through all or any of the slits 14, 15 and 16, thus making it possible to inhibit deformation of the outer tubular electrode 10 due to the aforementioned pressure rise.

Further, even if the pressure having been risen is released to the outside by the aforementioned circulation, not a little volumetric expansion of urea water at the time of freezing is still caused in the intervening gap. The length of one slit, however, can be held down by the existence of the intermediate no-slit formed areas 17 and 18. Thus, the outer tubular electrode 10 can maintain a necessary strength by the existence of the intermediate no-slit formed areas 17 and 18 though formed with the plurality of slits 14, 15 and 16, and deflexion of the outer tubular electrode 10 due to the aforementioned volumetric expansion is inhibited, so that deformation of the outer tubular electrode 10 can be inhibited effectively. In the meantime, for inhibiting, in this manner, deformation of the outer tubular electrode 10 effectively, it is preferable from the point of view of attaining the strength of the outer tubular electrode 10 effectively that the distance between adjacent two of the slits 14, 15 and 16 formed on one generator of the outer circumferential surface of the outer tubular electrode 10 (i.e., the length of each of the intermediate no-slit formed areas 17 and 18 on each generator) is 5 mm or more when observed along the generator and the thickness of the outer tubular electrode 10 is 0.5 mm or more.

Further, by providing the front end portion 11 of the outer tubular electrode 10 with the forward no-slit formed area 71 that extends continuously from the end surface of the forward side of the outer tubular electrode 10, the portions that are divided by the slit 14 on each generator can be joined and reinforced, so that the strength of the outer tubular electrode 10 can be increased. Further, by providing the rear end portion 12 of the outer tubular electrode 10 with the rearward no-slit formed area 72 that extends continuously from the end surface of the rearward side of the outer tubular electrode 10, the strength of the outer tubular electrode 10 can be increased further. By the provision of the rearward side no-slit formed area 72, even if stress is caused at the rear end portion 12 of the outer tubular electrode 10 due to vibrations to which the liquid level sensor 1 is subjected when the sensor 1 is installed on a vehicle and used, the strength capable of withstanding the stress can be attained, so that the resistance to vibration of the sensor 1 can be improved.

Then, the principle of detection of the state of liquid such as water level (level of urea water in this embodiment) by the liquid level sensor 1 of this embodiment will be described with reference to FIG. 4. FIG. 4 is an enlarged sectional view of the surface of urea water filled in the space (intervening space) between the outer tubular electrode 10 and the inner electrode 20 and its adjacent portion. The liquid level sensor 1 is installed on the tank (not shown) containing urea water in a way as to be disposed in such a state that the outer tubular electrode 10 and the inner electrode 20 extend axially along the direction in which the level of urea water becomes higher or lower. By measuring the electrostatic capacity of the intervening space (the space between the outer tubular electrode 10 and the inner tubular electrode), it can be detected how high the level of urea water existing between the both is positioned in the axial direction of the outer tubular electrode 10. This is, as is well known, based on the fact that the electrostatic capacity between two points that are different in electric potential is inversely proportional to the distance between the two points.

Namely, as shown in FIG. 4, the distance of a portion that causes an electric potential while including an intervening gap portion not filled with urea water is indicated by the distance B, that is, becomes equal to the distance corresponding to the sum of the thickness of an air layer between the both and the insulating layer 23. On the other hand, the distance of a portion that causes an electric potential while including an intervening gap portion filled with urea water is indicated by the distance C, that is, becomes equal to the distance corresponding to the thickness of the insulating layer 23 since urea water is electrically conductive so that the outer tubular electrode 10 and urea water become equal in the electric potential. Namely, the portion filled with urea water is smaller in the distance between the portions of causing a potential difference than the portion not filled with urea water and therefore larger in the electrostatic capacity. For this reason, in case voltage is applied across the intervening space, a proportion of the portion that is of the distance C and larger in the electrostatic capacity increases with increase of the portion filled with urea water. In this instance, since as is well known, the electrostatic capacity is proportional to the area of portions that are confronted with each other and different in the electric potential, the electrostatic capacity that is detected totally by the liquid level sensor 1 increases with increase of the level of urea water.

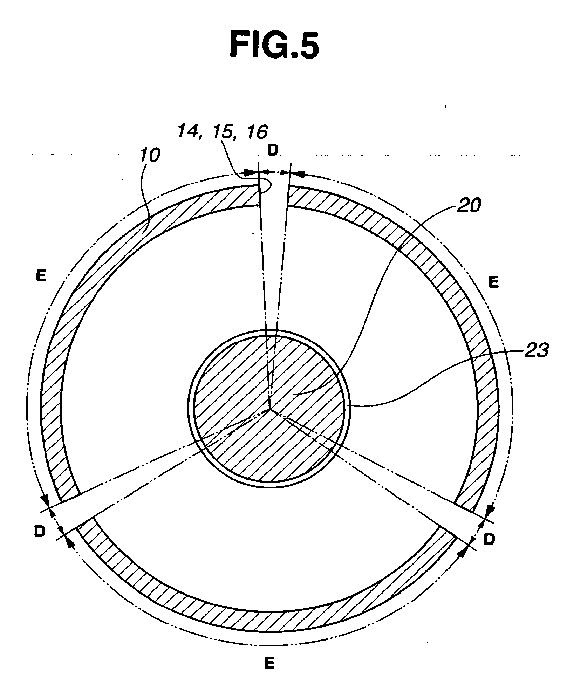

In measurement of the level of such liquid, as the insulating layer 23 formed on the outer circumferential surface of the inner electrode 20 becomes thinner, a larger electrostatic capacity can be obtained even when the voltage applied across the outer tubular electrode 10 and the inner electrode 20 is low. Since there may possibly occur such a case where an insulating ability of the insulating layer 23 is lost due to damage or the like, the slits 14, 15 and 16 formed in the outer tubular electrode 10 are limited in the width (opening width) so that even in the case a solid object such as a lump of ice exists in urea water the solid object does not go into the space between the outer tubular electrode 10 and the inner electrode 20. Hereinafter, with reference to FIG. 5, description will be made as to the width of the slits 14, 15 and 16. FIG. 5 is a sectional view of a portion where any of the slits 14, 15 and 16 is formed, which is taken in the direction crossing the center axis of the outer tubular electrode 10 at right angles.

As shown in FIG. 5, the outer tubular electrode 10 is formed with the slits 14, 15 and 16 on three respective generators which are disposed with equal intervals in the circumferential direction of the outer circumferential surface. In FIG. 5, the width of the slits 14, 15 and 16 is indicated by the width D that extends, with respect to the section of the outer tubular electrode 10, in the direction along the outer circumference. Similarly, the width of the portions where the slits 14, 15 and 16 are not formed is indicated by the width E that extends, with respect to the section of the outer tubular electrode 10, in the direction along the outer circumference. Namely, the sum of all of widths D and widths E corresponds to the length of the outer circumference of the outer tubular electrode 10.

In this embodiment, the sum of widths D of the slits 14, 15 and 16 is set at 10% of the outer circumferential length (the sum of widths D and widths E) of the outer tubular electrode 10 or smaller. By setting the width of the slits 14, 15 and 16 at such a size, in case a solid object such as impurities and a lump of frozen urea water is contained in urea water, it becomes difficult for such a solid object to pass the slits 14, 15 and 16, thus making it possible to the insulating layer 23 from its damage or the like. In the meantime, even if the width D of the slits 14, 15 and 16 is smaller than 10% of the outer circumferential length of the outer tubular electrode 10, a small solid object may possibly pass the slits 14, 15 and 16. However, even if a solid object of such a size as to be able to pass the slits 14, 15 and 16 of such width strikes against the insulating layer 23 of the inner electrode 20, it seldom damages the insulating layer 23 and has a difficulty in causing an influence on the insulating ability thereof since it does not have a sufficient mass.

In the meantime, in this embodiment, the width (opening width) E of each of the slits 14, 15 and 16 in the direction crossing the axial direction at right angles is set at 2.5 mm. By setting the width E of each of the slits 14, 15 and 16 at 5mm or smaller, it becomes possible to prevent a solid object such as a lump of ice, i.e., frozen urea water that is frozen outside the outer tubular electrode 10, of such size as to be able to damage the insulating layer 23 when brought into contact with the insulating layer 23 from going into the outer tubular electrode 10 through each of the slits 14, 15 and 16. Accordingly, the insulating layer 23 can be protected more effectively.

Further, the slits 14, 15 and 16 of the liquid level sensor 1 of this embodiment is formed so that the outer tubular electrode 10 is not deformed by a pressure rise caused by freezing of urea water existing in the intervening gap during use of the sensor in cold districts or the like terrain. Specifically, if urea water in the intervening space is cooled rapidly, there may occur such a case in which urea water existing in the intervening gap starts freezing in two directions from the front end portion 11 side and the rear end portion 12 side of the outer tubular electrode 10. Then, a pressure rise toward an intermediate side of urea water existing in the intervening space is caused due to freezing. However, since circulation between the inside and the outside of the outer tubular electrode 10 is attained by the slits 14, 15 and 16, the above-described pressure rise can be released effectively to the outside of the outer tubular electrode 10. For obtaining such effect, it is preferable that the sum of the widths D of the slits 14, 15 and 16 is 3% or more of the outer circumference of the outer tubular electrode 10.

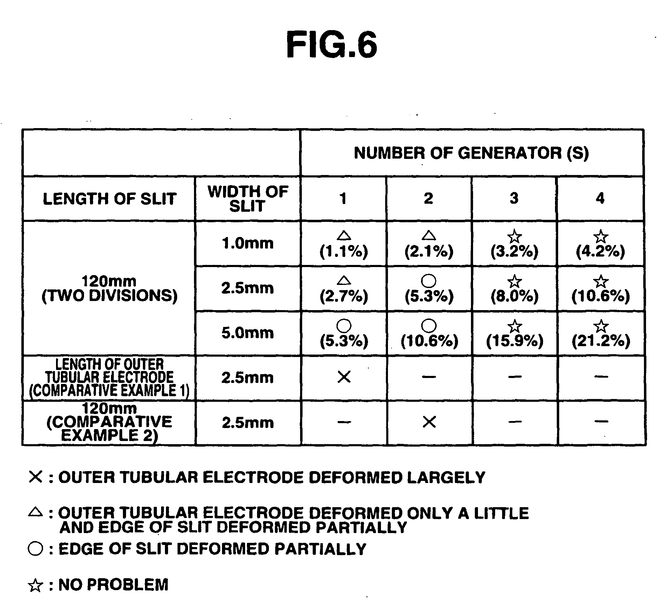

In this connection, an evaluation test was made with respect to the strength of the outer tubular electrode in relation to the width of the slit and the number of divisions of the slit on the generator (the number of slits in row on the same generator). The result is shown in FIG. 6. FIG. 6 is a table showing the result of the evaluation test with respect to the strength of the outer tubular electrode in relation to the width of the slit and the number of divisions of the slit on the generator.

In the evaluation test, a solid, cylindrical metallic bar made of SUS304 was used for the inner electrode. Further, cylindrical metallic tubes of 30 mm in the outer diameter, 1 mm thick and 300 mm in the overall length, made of SUS304 and formed with slits based on 12 kinds of conditions that will be described later were prepared for the outer tubular electrode. Two examples were prepared for each kind, rapidly cooled to freeze under the condition where the intervening space was filled with water, and thereafter thawed to evaluate the condition of the outer tubular electrode.

Twelve kinds of outer tubular electrodes by the combinations of the following three conditions were prepared. First, with respect to the number of generators, on which the slits are formed, on the outer circumferential surface of the outer tubular electrode, outer tubular electrodes having one slit, two slits (every 180 degrees when observed in the section crossing the center axis of the outer tubular electrode at right angles), three slits (every 120 degrees) and four slits (every 90 degrees), respectively were prepared for the combinations. Then, the length of the slits was 120 mm, two slits were disposed on one generator and the reinforcement portion positioned between adjacent slits was 10 mm in length. Further, the outer tubular electrode having one slit (of the opening width of 2.5 mm) extending continuously from the front end to the rear end was prepared as a comparative example 1, and the tubular electrode having two slits (of the opening width of 2.5 mm) of the length (120 mm) smaller than the overall length, which slits were formed so as to extend continuously from the front end of the outer tubular electrode and be positioned on the different generators on the outer tubular electrode were prepared as a comparative example 2. In the meantime, the rear end of the two slits of the comparative example 2 were adjusted so as to be located at the same position with respect to the axial direction of the outer tubular electrode.

As shown in FIG. 6, in case the number of generator(s) on the outer circumferential surface of the outer tubular electrode, on which generator is formed the slits, is one and the width of the slit is 1.0 mm (the rate of the width of the slit to the overall circumference is 1.1%) or 2.5 mm (the aforementioned rate is 2.7%), only a little deformation was caused in the outer tubular electrode and partial deformation was caused in the edges of the slits so that the result of evaluation was "Δ". Under the same condition except that the width of the slits was 5.0 mm (the aforementioned rate is 5.3%), partial deformation was caused in the edges of the slits so that the result of evaluation was "O".

Further, in case the number of the generator (s) on the outer circumferential surface of the outer tubular electrode, on which generator (s) the slits are formed, was two and the width of the slit was 1.0 mm (the rate of the widths of the slits to the overall circumference was 2.1%), only a little deformation was caused in the outer tubular electrode and partial deformation was caused in the edges of the slits so that the result of evaluation was "Δ". Under the same condition except that the width of the slit was 2.5 mm (the aforementioned rate was 5.3%) or 5.0 mm (the aforementioned rate was 10.6%), partial deformation was caused in the edges of the slits so that the result of evaluation was "O".

Further, in case the number of the generators on the outer circumferential surface of the outer tubular electrode, on which generator (s) the slits are formed, was three, deformation of the outer tubular electrode was not caused irrespective of the width of the slit so that the outer tubular electrode was judged to have no problem and the result of evaluation was "☆". In the meantime, in this embodiment, in case the width of the slit is 1.0 mm, 2.5 mm and 5.0 mm, the rate of the widths of the slits to the overall circumference is 3.2%, 8.0% and 15.9%, respectively. Further, in case the number of the generator (s) on the outer circumferential surface of the tubular electrode, on which generator (s) the slits are formed, was four, there was not caused any problem irrespective of the width of the slit so that the result of evaluation was "☆". In the meantime, in this embodiment, in case the width of the slit is 1.0 mm, 2.5 mm and 5.0 mm, the rate of the widths of the slits to the overall circumference is 4.2%, 10.6% and 21.2%, respectively.

On the other hand, with respect to the comparative example 1 in which one slit was formed so as to extend continuously from the front end to the rear end of the outer tubular electrode and the comparative example 2 in which two slits were formed so as to extend continuously from the front end of the outer tubular electrode, both of the comparative examples caused large deformation in the outer tubular electrode so that result of evaluation was "×".

From the result of the above-described evaluation test, it was revealed that none of the examples having such a structure in which a plurality of slits were formed along the generator on the outer circumferential surface of the outer tubular electrode and the reinforcement portion was provided between adjacent slits, caused large deformation in the outer tubular electrode so that the result of evaluation was "X", From this, it is found that such a structure in which a plurality of slits are formed along a generator on an outer circumferential surface of a slender outer tubular electrode and an intermediate no-slit formed area in which no slit exists over the entire circumference is provided between adjacent slits can prevent the outer tubular electrode from being deformed largely even when liquid in a space (intervening space) between the outer tubular electrode and the inner electrode is frozen. Accordingly, it becomes possible to provide a capacitive liquid state sensor that can inhibit expansion of the space between the inner electrode and the outer tubular electrode, effectively and therefore can measure the electrostatic capacity between the aforementioned intervening gap highly accurately over an extended period of time.

Further, from the result of the aforementioned evaluation test, it was revealed that substantial deformation of the outer tubular electrode was not caused though a little deformation of the edge of the slit was observed, provided that the rate of the width(s) of the slit(s) to the outer circumference of the outer tubular electrode was 3% or more. In the meantime, though in this embodiment the length of the outer tubular electrode did not exert any influence on the deformability of the outer tubular electrode, use of an outer tubular electrode of the length larger than that (300 mm) of one used in this embodiment may cause the length of the slit to exert an influence on flexing of the outer tubular electrode, so that it is desirable that the number of divisions of the slit is increased to provide an intermediate no-slit formed area that functions as a reinforcement portion. Further, it was also revealed that an influence on deformation of the outer tubular electrode was not caused, provided that the number of generator(s) on the outer circumferential surface of the outer tubular electrode, on which the generator (s) was formed, was three or more. In this connection, if the number of generator(s) is three, the slits are disposed every 120 degrees on the outer circumference with respect to the section crossing the center axis of the outer tubular electrode at right angles, a good disposition balance is obtained, and the pressure caused to rise with volumetric expansion of liquid at the time of freezing can be released to the outside effectively without depending upon the directionability of the circumferential direction while retaining a sufficient strength of the outer tubular electrode.

In the meantime, it is the matter of course that various modifications of the present invention are possible. For example, while in this embodiment the inner electrode 20 is described as a solid, cylindrical metallic bar, it is not limited to the cylindrical shape but can be in the form of a rectangular tube.

Further, while in this embodiment urea water has been described as an example of liquid which is an object to be measured with respect to the state of liquid, it is not for the purpose of limitation since the state of liquid can be detected by applying the insulation layer 23 to the outer circumferential surface of the inner electrode 20, provided that the liquid is electrically conductive. Further, if liquid is electrically non-conductive, it is not necessitated to form the insulation layer 23 on the outer circumferential surface of the inner electrode 20. This is because there is a difference in the dielectric constant between air and electrically non-conductive liquid so that by measuring the electrostatic capacity between the outer tubular electrode 10 and the inner electrode 20 similarly to the embodiment of the present invention there is caused a difference in the electrostatic capacity.

Further, the state of liquid to be measured is not limited to the level of water (level of liquid) but can be, for example, the density of liquid, the degree of deterioration of liquid, the degree by which foreign matter is contained in liquid, etc.

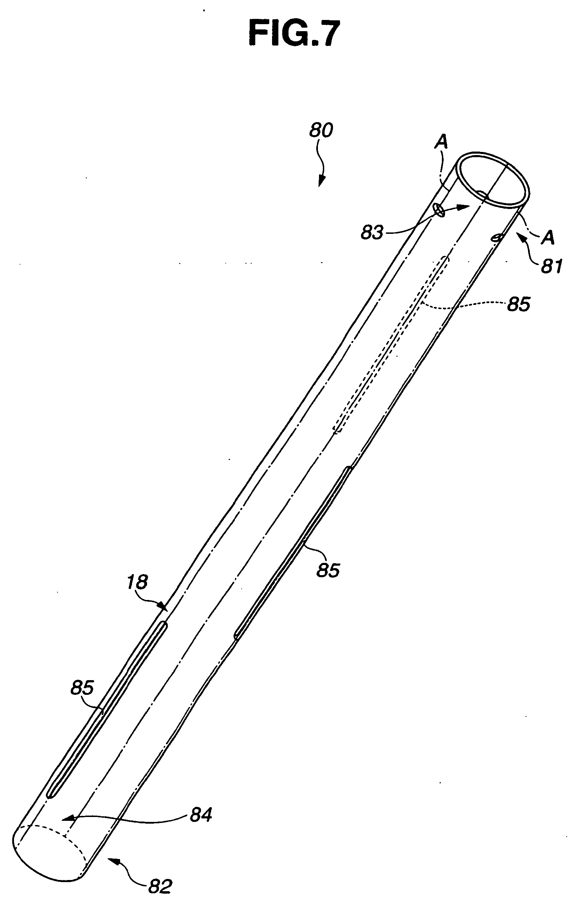

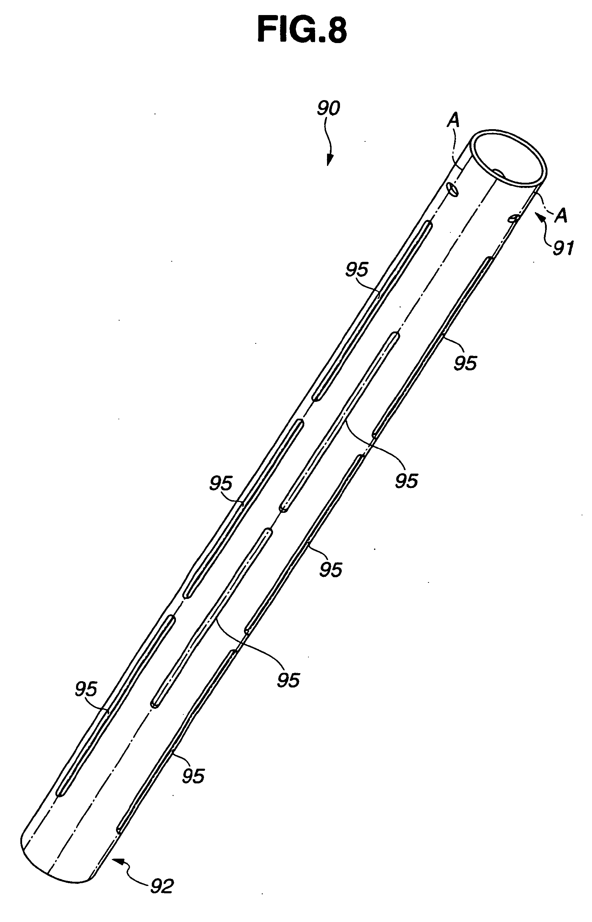

Further, while the embodiment has been described and shown with respect to a structure in which the slender slits 14, 15 and 16 are formed along three generators (indicated by one-dot chain line A in the figure), the positions for arrangement of the plurality of slits on the outer tubular electrode is not limited to this. For example, as shown in FIG. 7, a plurality of slits 85 may be arranged spirally along the axial direction of an outer tubular electrode 80. In the meantime, also at a front end portion 81 and a rear end portion 82 of the outer tubular electrode 80 are formed similarly to the outer tubular electrode 10 of the aforementioned embodiment a forward no-slit formed area 83 and a rearward no-slit formed area 84 which are tubular and extend continuously from the respective front and rear end portions and at which there does not exist any slit. Further, as a further embodiment, as shown in FIG. 8, a plurality of slits 95 may be provided in a zigzag manner along the axial direction of an outer tubular electrode 90. In the meantime, also at a front end portion 91 and a rear end portion 92 of the outer tubular electrode 90 are formed similarly to the outer tubular electrode 10 of the aforementioned embodiment a forward no-slit formed area 93 and a rearward no-slit formed area 94 which are tubular and extend continuously from the respective front and rear end portions and at which there does not exist any slit. However, in either of the outer tubular electrodes 80 and 90 shown in FIGS.8 and 9, the plurality of slits 85 or 95 are formed so as to satisfy such a relation that when arbitrary two of the slits are selected, the front end of one slit 85 or 95 is positioned more forward than the front end of the other slit 85 or 95 and the rear end of one slit 85 or 95 is positioned more forward than that of the other slit 85 or 95.

### INDUSTRIAL APPLICABILITY

The present invention can be applied to a capacitive liquid state sensor that can detect a liquid state sensor through measurement of an electrostatic capacity between two members that are different in potential.

## Claims

1. A capacitive liquid state sensor (1) comprising an outer tubular electrode (10) made of a conductive material and in the form of a tube, an inner electrode (20) made of a conductive material, in the form of a tube or pillar and disposed within the outer tubular electrode and along an axial direction of the outer tubular electrode, and a base (40) for supporting the outer tubular electrode and the inner electrode at a rearward side thereof and in a non-contact condition, whereby
the outer tubular electrode (10) includes a plurality of slits (14, 15, 16) opening along the axial direction and having the length shorter than the overall length of the outer tubular electrode, and
the plurality of slits (14, 15, 16) includes a first slit and a second slit, a front end of the first slit is positioned more forward than a front end of the second slit, and a rear end of the first slit is position more forward than a rear end of the second slit, **characterized in that** the sum of opening widths of the slits is 3% of the outer circumference of the outer tubular electrode or more when observed in a section taken by a plane crossing a center axis of the outer tubular electrode at right angles.

2. A capacitive liquid state sensor according to claim 1, **characterized in that** a front end of any one of the plurality of slits (14, 15, 16) is positioned more rearward than a front end of the outer tubular electrode (10).

3. A capacitive liquid state sensor according to claim 1 or 2, **characterized in that** a rear end of any one of the plurality of slits (14, 15, 16) is positioned more forward than a rear end of the outer tubular electrode (10).

4. A capacitive liquid state sensor according to any one of claims 1 to 3, **characterized in that** the plurality of slits (14, 15, 16) are positioned on at least one generator (A) at an outer circumferential surface of the outer tubular electrode (10).

5. A capacitive liquid state sensor according to claim 4, **characterized in that** the plurality of slits are positioned on each of a plurality of different generators (A) at the outer circumferential surface of the outer tubular electrode.

6. A capacitive liquid state sensor according to any one of claims 1 to 5, **characterized in that** the rear end of the first slit is positioned more forward than the front end of the second slit, and the outer tubular electrode (10) includes an intermediate no-slit formed area (17 or 18) in which no-slit exists all over the circumference of the outer tubular electrode (10), between the first slit and the second slit.

7. A capacitive liquid state sensor according to claim 6, **characterized in that** an insulation layer (23) is formed on the outer circumferential surface of the inner electrode (20), and the sum of widths of the slits(14, 15, 16) is 10% of the outer circumference of the outer tubular electrode (10) or less when observed in said section.

8. A capacitive liquid state sensor according to claim 1, **characterized in that** an insulation layer (23) is formed on the outer circumferential surface of the inner electrode (20), and the width of the slits (14, 15, 16) is 5 mm or less when observed in a section taken by a plane crossing a center axis of the outer tubular electrode at right angles.

9. A capacitive liquid state sensor according to any one of claims 1 to 8, **characterized in that** the liquid is urea water.

## Patentansprüche

1. Kapazitiver Flüssigkeitszustandssensor (1), umfassend eine äußere rohrförmige Elektrode (10), die aus einem leitfähigen Material gefertigt ist und in Form eines Rohres vorliegt, eine innere Elektrode (20), die aus einem leitfähigen Material gefertigt ist, in Form eines Rohres oder einer Säule vorliegt und innerhalb der äußeren rohrförmigen Elektrode und entlang einer Axialrichtung der äußeren rohrförmigen Elektrode angeordnet ist, und eine Basis (40) zum Stützen der äußeren rohrförmigen Elektrode und der inneren Elektrode an einer hinteren Seite hiervon und in einem kontaktfreien Zustand, wobei
die äußere rohrförmige Elektrode (10) eine Mehrzahl von Schlitzen (14, 15, 16) beinhaltet, die sich entlang der Axialrichtung öffnen und eine Länge aufweisen, die kleiner als die Gesamtlänge der äußeren rohrförmigen Elektrode ist, und
die Mehrzahl von Schlitzen (14, 15, 16) einen ersten Schlitz und einen zweiten Schlitz beinhaltet, wobei ein vorderes Ende des ersten Schlitzes weiter vorne als ein vorderes Ende des zweiten Schlitzes positioniert ist und ein hinteres Ende des ersten Schlitzes weiter vorne als ein hinteres Ende des zweiten Schlitzes positioniert ist, **dadurch gekennzeichnet, dass** die Summe der Öffnungsbreiten der Schlitze 3% des äußeren Umfanges der äußeren rohrförmigen Elektrode oder mehr bei einer Betrachtung in einem Schnitt beträgt, der durch eine Ebene genommen ist, die eine Mittelachse der äußeren rohrförmigen Elektrode unter rechten Winkeln schneidet.

2. Kapazitiver Flüssigkeitszustandssensor nach Anspruch 1, **dadurch gekennzeichnet, dass** ein vorderes Ende eines beliebigen aus der Mehrzahl von Schlitzen (14, 15, 16) weiter hinten als ein vorderes Ende der äußeren rohrförmigen Elektrode (10) positioniert ist.

3. Kapazitiver Flüssigkeitszustandssensor nach Anspruch 1 oder 2, **dadurch gekennzeichnet, dass** ein hinteres Ende eines beliebigen aus der Mehrzahl von Schlitzen (14, 15, 16) weiter vorne als ein hinteres Ende der äußeren rohrförmigen Elektrode (10) positioniert ist.

4. Kapazitiver Flüssigkeitszustandssensor nach einem der Ansprüche 1 bis 3, **dadurch gekennzeichnet, dass** die Mehrzahl von Schlitzen (14, 15, 16) an wenigstens einem Generator (A) an einer äußeren Umfangsoberfläche der äußeren rohrförmigen Elektrode (10) positioniert ist.

5. Kapazitiver Flüssigkeitszustandssensor nach Anspruch 4, **dadurch gekennzeichnet, dass** die Mehrzahl von Schlitzen an jedem aus einer Mehrzahl von unterschiedlichen Generatoren (A) an der äußeren Umfangsoberfläche der äußeren rohrförmigen Elektrode positioniert ist.

6. Kapazitiver Flüssigkeitszustandssensor nach einem der Ansprüche 1 bis 5, **dadurch gekennzeichnet, dass** das hintere Ende des ersten Schlitzes weiter vorne als das vordere Ende des zweiten Schlitzes positioniert ist und die äußere rohrförmige Elektrode (10) einen schlitzfrei ausgestalteten Zwischenbereich (17 oder 18) beinhaltet, in dem an dem gesamten Umfang der äußeren rohrförmigen Elektrode (10) kein Schlitz zwischen dem ersten Schlitz und dem zweiten Schlitz vorhanden ist.

7. Kapazitiver Flüssigkeitszustandssensor nach Anspruch 6, **dadurch gekennzeichnet, dass** eine Isolationsschicht (23) an der äußeren Umfangsoberfläche der inneren Elektrode (20) ausgebildet ist und die Summe der Breiten der Schlitze (14, 15, 16) 10% des äußeren Umfanges der äußeren rohrförmigen Elektrode (10) oder weniger bei einer Betrachtung in dem Schnitt beträgt.

8. Kapazitiver Flüssigkeitszustandssensor nach Anspruch 1, **dadurch gekennzeichnet, dass** eine Isolationsschicht (23) an der äußeren Umfangsoberfläche der inneren Elektrode (20) ausgebildet ist und die Breite der Schlitze (14, 15, 16) 5 mm oder weniger bei einer Betrachtung in einem Schnitt beträgt, der durch eine Ebene genommen ist, die eine Mittelachse der äußeren rohrförmigen Elektrode unter rechten Winkeln schneidet.

9. Kapazitiver Flüssigkeitszustandssensor nach einem der Ansprüche 1 bis 8, **dadurch gekennzeichnet, dass** die Flüssigkeit Harnwasser ist.

## Revendications

1. Capteur d'état liquide capacitif (1) comprenant une électrode tubulaire externe (10) réalisée en un matériau conducteur et sous la forme d'un tube, une électrode interne (20) réalisée en un matériau conducteur, sous la forme d'un tube ou pilier et disposée dans l'électrode tubulaire externe et dans une direction axiale de l'électrode tubulaire externe, et une base (40) pour supporter l'électrode tubulaire externe et l'électrode interne à un côté arrière de celle-ci et dans un état non-contact, par quoi
l'électrode tubulaire externe (10) présente une pluralité de fentes (14, 15, 16) s'ouvrant dans la direction axiale et d'une longueur plus courte que la longueur totale de l'électrode tubulaire externe, et
la pluralité de fentes (14, 15, 16) comporte une première fente et une deuxième fente, une extrémité frontale de la première fente est positionnée plus vers l'avant qu'une extrémité frontale d'une deuxième fente, et une extrémité arrière de la première fente est positionnée plus vers l'avant qu'une extrémité arrière de la deuxième fente, **caractérisé en ce que** la somme des largeurs d'ouverture des fentes représente 3% de la circonférence extérieure de l'électrode tubulaire externe ou plus vue en section selon un plan croisant l'axe central de l'électrode tubulaire externe à angles droits.

2. Capteur d'état liquide capacitif selon la revendication 1, **caractérisé en ce qu'**une extrémité frontale d'une quelconque de la pluralité de fentes (14, 15, 16) est positionnée plus vers l'arrière qu'une extrémité frontale de l'électrode tubulaire externe (10).

3. Capteur d'état liquide capacitif selon la revendication 1 ou 2, **caractérisé en ce qu'**une extrémité arrière d'une quelconque de la pluralité de fentes (14, 15, 16) est positionnée plus vers l'avant qu'une extrémité arrière de l'électrode tubulaire externe (10).

4. Capteur d'état liquide capacitif selon l'une quelconque des revendications 1 à 3, **caractérisé en ce que** la pluralité de fentes (14, 15, 16) sont positionnées sur au moins un générateur (A) à une surface circonférentielle extérieure de l'électrode tubulaire externe (10).

5. Capteur d'état liquide capacitif selon la revendication 4, **caractérisé en ce que** la pluralité de fentes sont positionnées sur chacun d'une pluralité de générateurs différents (A) à la surface circonférentielle extérieure de l'électrode tubulaire externe.

6. Capteur d'état liquide capacitif selon l'une quelconque des revendications 1 à 5, **caractérisé en ce que** l'extrémité arrière de la première fente est positionnée plus vers l'avant que l'extrémité avant de la deuxième fente, et l'électrode tubulaire externe (10) comporte une zone intermédiaire exempte de fente (17 ou 18) dans laquelle il n'y a pas de fente sur la circonférence de l'électrode tubulaire externe (10), entre la première fente et la deuxième fente.

7. Capteur d'état liquide capacitif selon la revendication 6, **caractérisé en ce qu'**une couche d'isolation (23) est formée sur la surface circonférentielle externe de l'électrode interne (20), et la somme de largeurs des fentes (14, 15, 16) représente 10% de la circonférence extérieure de l'électrode tubulaire externe (10) ou moins vue en section précitée.

8. Capteur d'état liquide capacitif selon la revendication 1, **caractérisé en ce qu'**une couche d'isolation (23) est formée sur la surface circonférentielle externe de l'électrode interne (20), et la largeur des fentes (14, 15, 16) représente 5 mm ou moins vue en une section selon un plan croisant l'axe central de l'électrode tubulaire externe à angles droits.

9. Capteur d'état liquide capacitif selon l'une quelconque des revendications 1 à 8, **caractérisé en ce que** le liquide est de l'eau d'urée.
